# EUROPEAN PATENT SPECIFICATION

(11) **EP 3 564 155 B1**
(45) Date of publication and mention of the grant of the patent: **29.09.2021**
(21) Application number: 17832376.2
(22) Date of filing: 27.12.2017
(51) Int. Cl.: B65D 85/804

(54) **CAPSULE WITH A PASSAGE AS RECESS AND SYSTEM FOR THE PRODUCTION OF EDIBLE PRODUCTS**
KAPSEL MIT EINEM REZESS ALS DURCHGANG UND SYSTEM ZU VERWENDUNG VON KAPSELN
CAPSULE AVEC UN RENFONCEMENT COMME PASSAGE POUR LA PRODUCTION DE PRODUITS COMESTIBLES ET SYSTÈME L'UTILISANT

(30) Priority: 29.12.2016 PT 2016109813
(43) Date of publication of application: 06.11.2019
(73) Proprietor: Novadelta-Comércio e Industria de Cafés, Lda., 1950-041 Lisboa (PT)
(72) Inventor: NABEIRO, Rui Miguel, 7370-112 Campo Maior (PT); DE FIGUEIREDO BRANCO, João André, 1885-091 Moscavide (PT); MEDINA MUNDT, Jesús, 1800-098 Lisboa (PT)
(74) Representative: Ferreira Pinto, Francisca
(86) International application number: PCT/PT2017/050030
(87) International publication number: WO 2018/124898

(56) References cited:
- EP-A1- 0 521 510
- WO-A1-2008/125256
- WO-A1-2012/100976
- WO-A1-2015/002561
- WO-A1-2015/005814

## Description

### Field of the invention

The present invention refers to the field of the capsules for preparing edible products including aromatic beverages, such as for example espresso coffee, tea and similar.

The present invention further refers to a system for preparing edible products based upon capsules.

### Background of the invention

The prior art includes several solutions relating to systems for preparing beverages, such as for example machines for preparing beverages including espresso coffee, tea and similar, based upon capsules containing a single portion of edible substance and provided so that are collected inside of a brewing device. Said brewing device is adapted so as to inject a pressurized fluid flow through an upstream side of capsule, and to collect the resulting beverage from a downstream side of capsule.

In particular in the case of capsules provided in a substantially rigid material and construction structure, despite being retained by means of pressured engagement inside of a respective brewing device, this type of capsules can slip a direction transversal to the prevailing flow direction, notably in a rotation movement around its axial axis, in particular in case that the pressurized water injection is not done by means of penetration of the capsule envelope. In fact, in the case of brewing devices with multiple pressurized water injection outlets, there is the need to ensure that a capsule of this type is retained in reliable manner, and eventually positioned on a given angular position, inside of a respective brewing device.

The document EP 2287090 B1 discloses a capsule comprising a container part with a base wall that presents a structure that forms a reduced thickness of entry wall of the pressurized fluid. In particular, said structure forms a continuous annular recess portion of radius R1 where there is provided a plurality of injection holes.

The document EP 2394932 B1 discloses a capsule similar to that of the aforementioned document, whereby in this case there is provided a weakened material region designed such that breaks at least partially under the pressure of a pressurized liquid. Moreover, the body of the capsule is made of plastic or from a plastic based material.

The document EP 2560897 B1 discloses a capsule comprising a container part with a base wall that presents a weakened material zone that defines a wall part that can be broken, and a portion of greater thickness of said base wall around which the wall part that can be broken turns.

The document EP 2757057 A1 discloses a capsule that presents a groove that surrounds a central region that presents at least perforation zone with perforations that provide an entry of hot water into the interior of capsule.

The document WO 2008/125256 A1 discloses a capsule comprising a lid part that can present at least one facilitated break formation for the entrance of water. Such formation does not develop along a circular alignment and does not correspond to a reduction of wall thickness, such that it does not result in a localized reduction of wall thickness along such circumferential alignment.

The document WO 2015/002562 A1 submitted by the author of the present application discloses a capsule comprising a lid-like element that presents at least one engagement groove disposed such that is surrounded by, or itself surrounds, a zone of said second construction element adapted for fluid passage.

### General description of the invention

The objective of the present invention is to provide a capsule in a substantially rigid construction, for collection of a single portion of an edible substance, in particular adapted for preparing edible products, including beverages, inside of a respective brewing device, and that provides sufficient oxygen barrier and a reliable opening to pressurized flow through a respective upstream oriented wall and presenting a weakened material region.

This objective is solved by means of a capsule according to claim 1.

In particular, this objective is attained by means of a capsule that presents a lid-like construction element, presenting a wall part and a flow passageway wall provided as a recess region of circular shape in the central region of said wall part and presenting a smaller wall thickness, whereby said passageway wall is delimited along at least part of a circumferential alignment by a weakened material region adapted so that said passageway wall breaks in this zone and swivels around part of said circumferential alignment.

The capsule according to the invention comprises a first construction element configured in a container-like form, and a second construction element configured in a lid-like form and adapted for entry of a pressurized fluid preferentially without holing of a respective exterior envelope, and adapted for joint assembly so as to provide an interior volume for collection of a portion of at least one edible substance, including coffee, tea and similar.

It is preferred when the upstream oriented surface of capsule presents a recess region surrounding the passageway wall and an intercalary region between these.

It is preferred when said recess region develops from a second circumferential alignment in the proximity of said passageway wall and so that results an intercalary region between said recess region and said passageway wall, whereby said recess region presents a recess wall thickness (e₅) that is smaller than the prevailing wall thickness (e₃₁), and bigger than the passageway wall thickness (e₄) of said passageway wall, so that structurally reinforces the surrounding region of said passageway wall and provides retention surfaces for an engagement element provided on said brewing device.

It is preferred when at least most part, preferentially the totality, of recess wall thickness (e₅) of said recess region develops between transversal planes in the proximity downstream of the transversal planes that delimit the passageway wall thickness (e₄) of said passageway wall, so that at least most part of said recess wall thickness (e₅) is provided downstream of said passageway wall thickness (e₄).

It is preferred when said passageway wall is delimited by a first circumferential alignment that presents a first diameter (d₁) smaller than 0,35 times the diameter (d) of said flow entry wall part.

It is preferred when said recess region is delimited on a respective distal side by a circumferential alignment presenting a second diameter (d₂), whereby said second diameter (d₂) is at least 1,2 times bigger, preferentially at least 1,4 times bigger, and at most 2,5 times bigger, preferentially at most 2 times bigger than said first diameter (d₁).

It is preferred when the radial extension of said recess region is at least approximately similar, preferentially bigger than 0,8 times and smaller than 1,2 times the radial extension of said intercalary region.

It is preferred when said recess region presents a substantially polygonal transversal section defining at least three interior surfaces, preferentially five interior surfaces, and presenting a depth between 1 and 3 mm, preferentially between 1,5 and 2,5 mm, relative to the exterior surface of said second construction element, and a radial dimension between 1 and 3 mm, preferentially between 1,5 and 2,5 mm.

It is preferred when said intercalary region presents an intercalary wall thickness (e₆) that is bigger than the passageway wall thickness (e₄) of said passageway wall and bigger than the recess wall thickness (e₅) of said recess region, preferentially is at least approximately similar to said prevailing wall thickness (e₃₁), thereby structurally reinforcing the region surrounding said weakened material region and providing a support surface to a sealing element provided on said brewing device.

It is preferred when said intercalary region presents an intercalary wall thickness (e₆) that develops between planes transversal to the axial direction upstream and downstream of the transversal planes that delimit said passageway wall thickness (e₄) and recess wall thickness (e₅).

It is preferred when said intercalary region comprises a seat region that develops in the upstream oriented surface of said flow entry wall part along at least most part of the radial extension between said passageway wall and said recess region, whereby said seat region is adapted so that provides a seat surface to a sealing element provided on said brewing device.

It is preferred when said seat region presents a seat wall thickness (e₆₁) that is bigger than the passageway wall thickness (e₄) of said passageway wall, thereby improving the opening of said weakened material region as impinged by an upstream pressurized flow.

It is preferred when said seat region presents a seat wall thickness (e₆₁) that is bigger than the recess wall thickness (e₅) of said recess region, preferentially presents a wall thickness that is at least approximately similar to said prevailing wall thickness (e₃₁).

It is preferred when said intercalary region presents a guiding projection along said first circumferential alignment so that delimits said seat region relative to said passageway wall, whereby said guiding projection projects beyond the upstream oriented exterior surface of said flow entry wall part, so that provides a conduction surface that is adjacent and substantially orthogonal or oblique relative to the surface provided by said seat region.

It is preferred when said passageway wall presents a projection element that develops upstream, whereby said projection element develops along an extension beyond the plane defined the upstream oriented surface of said flow entry wall part, so that can be impinged by a flow injection part of said brewing device.

It is preferred when said projection element is provided only on one side of said passageway wall relative to said axial axis (X), preferentially in the proximity of perimeter of said passageway wall.

It is preferred when said projection element develops along an extension comprised between 10 to 40°, preferentially between 15 and 35°, of the circumferential alignment that develops in at least approximately parallel manner relative to the circumferential alignment defined by the exterior limit of said passageway wall.

It is preferred when said projection element is provided in the proximity of the perimeter and on the side that develops in the weakened material region presenting a smaller wall thickness.

Another objective of the present invention is to provide a system for preparing edible products based upon capsules, presenting capsules and a brewing device adapted so as to improve the entry of flow into said capsules, in particular opening of a passageway wall presenting a weakened material region.

This objective is solved according to claim 15.

It is preferred when said injection means are provided as a projection adapted so that at least part, preferentially at least most part of respective extension of projection develops inside the recess formed by said passageway wall on said flow entry wall part, when said brewing device is in a closed position.

It is preferred when said injection means are provided as a projection adapted so that exerts a mechanic pressure, preferentially in asymmetric manner, upon part of said passageway wall, in asymmetric manner relative to the form thereof and on a side opposite to that of a respective weakened material region.

It is preferred when said injection means are provided as a projection adapted so that exerts a mechanic pressure upon a projection element provided so that extends upstream and above and higher than said passageway wall, preferentially higher than said flow entry wall part.

An associated objective is to disclose a system that provides an improved concentration of pressurized flow on a passageway wall presenting a weakened material region.

It is preferred when said upstream actuation part presents an engagement element provided as a protuberance that develops at a distance from said injection means and adapted so that engages on said recess region provided on said flow entry wall part, so as to thereby retain said capsule with relation to a sealing element provided so that surrounds said injection means.

It is preferred when said engagement element is provided so that develops along an extension of arch of circumference that is smaller than 20°, preferentially smaller than 15°, and bigger than 3°, preferentially bigger than 5°.

It is preferred when said sealing element is provided with a ring shape and adapted so that sits on the seat region of said intercalary region between said passageway wall and recess region.

It is preferred when said sealing element is provided as a projection that develops along the axial direction with a smaller extension than the extension of said engagement element.

### Description of the Figures

The present invention shall be hereinafter explained in greater detail based upon the description of preferred embodiments thereof and the Figures attached.

The Figures show, in simplified schematic representations:
- Figure 1:: plan view (top) and side cut (bottom) of a capsule (1) according to prior art;
- Figure 2:: plan view (top) and side cut (bottom) of a capsule (1) according to present invention;
- Figure 3:: plan view of a first embodiment of a second construction element (3) in a capsule (1) according to the invention;
- Figure 4:: side cut view (top) and respective detail of central region (bottom) of second construction element (3) according to Figure 3;
- Figure 5:: plan view of a second embodiment of second construction element (3) in a capsule (1) according to the invention;
- Figure 6:: side cut view (top) and respective detail of central region (bottom) of second construction element (3) according to Figure 5;
- Figure 7:: plan view of a third embodiment of second construction element (3) in a capsule (1) according to the invention;
- Figure 8:: side cut view (top) and respective detail of central region (bottom) of second construction element (3) according to Figure 7;
- Figure 9:: plan view of a fourth embodiment of second construction element (3) in a capsule (1) according to the invention;
- Figure 10:: side cut view (top) and respective detail of central region (bottom) of second construction element (3) according to Figure 9;
- Figure 11:: side cut views of a brewing device (10) open (left-hand side) and closed (right-hand side) and capsule (1) according to the present invention;
- Figure 12:: front view of the upstream actuation part (11) of a brewing device (10) comprised in a system according to the invention.

### Detailed description of the invention

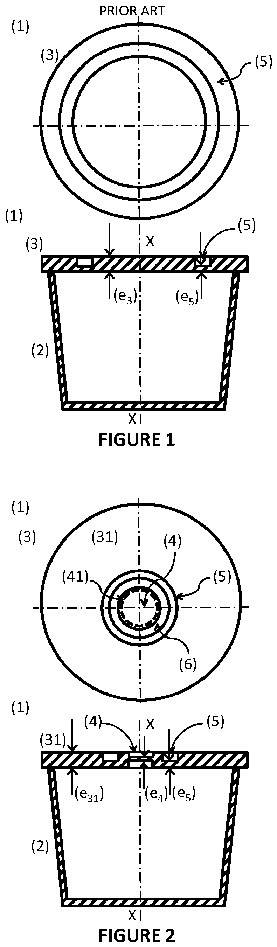

As can be observed in **Figure 1****,** a capsule of the type of capsule (1) includes a first construction element (2) configured in a container-like shape and a second construction element (3) configured in a lid-like shape. Said first and second construction elements (2, 3) are provided as substantially rigid, for example in a plastic material, and adapted for joint assembly along a common central axis (X) of said capsule (1), thereby providing an interior volume adapted for collection of a single portion of at least one edible substance, such as for example roasted ground coffee beans.

Optionally, there can be provided a recess region (5) on the upstream-oriented side, of annular shape and eventually presenting a weakened material region.

As can be observed in **Figure 2**, in the case of a capsule (1) according to the present invention, a second construction element (3) presents a flow entry wall part (31) that presents a disk-like general shape and a passageway wall (4) provided as a region that is recessed relative to the exterior surface planes of said flow entry wall part (31).

In the case of a first embodiment of said capsule (1), said passageway wall (4) presents a passageway wall thickness (e₄) that corresponds to a reduction of thickness of the prevailing wall thickness (e₃₁) of said flow entry wall part (31), provided in a region of circular shape and on both sides of said flow entry wall part (31), so that said passageway wall (4) develops in a intercalary plane between the exterior surfaces oriented upstream and downstream of said flow entry wall part (31). Moreover, it is preferred when at least the downstream surrounding walls, preferentially also the upstream surrounding walls of said passageway wall (4), develop along an oblique direction relative to the direction of said axial axis (X).

Said passageway wall part (4) presents a weakened material region (41) that develops along at least most part of said first circumferential alignment and that is adapted so that breaks under a given upstream pressure.

The second construction element (3) of said capsule (1) further presents a recess region (5) provided on the upstream oriented side of said flow entry wall part (31), whereby said recess region (5) develops from a second circumferential alignment in the proximity of said passageway wall (4) and so that results an intercalary region (6) between said recess region (5) and said passageway wall (4), whereby said recess region (5) presents a recess wall thickness (e₅) that is smaller than the prevailing wall thickness (e₃₁), and bigger than the passageway wall thickness (e₄) of said passageway wall (4), so that said passageway wall (4) is deflected under the pressurized flow so that breaks said weakened material region (41).

The second construction element (3) of said capsule (1) further presents an intercalary region (6) that presents an intercalary wall thickness (e₆) that is bigger than the passageway wall thickness (e₄) of said passageway wall (4) and bigger than the recess wall thickness (e₅) of said recess region (5), preferentially is at least approximately similar to said prevailing wall thickness (e₃₁), thereby improving the transmission of structural resistance from said recess region (5) and to said weakened material region (41).

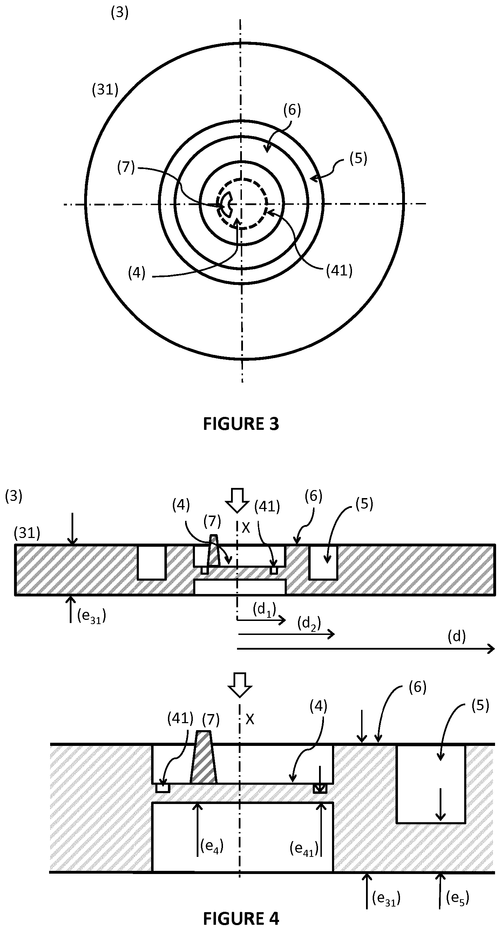

According to an inventive aspect of a capsule (1) according to the present invention, said passageway wall (4) presents a passageway wall thickness (e₄) that is smaller than said prevailing wall thickness (e₃₁), and respective weakened material region (41) is provided by means of localized reduction of said passageway wall thickness (e₄), so that results a region of weakened thickness (e₄₁) along said first circumferential alignment, thereby improving the opening of said passageway wall (4) when impinged by an upstream pressurized flow - see **Figures 3** and **4****.**

Moreover, said passageway wall (4) is provided as a reduction of said prevailing wall thickness (e₃₁) in a region of circular shape and centred relative to the centre (X) of said flow entry wall part (31), and said weakened material region (41) is provided between said prevailing wall thickness (e₃₁) and said passageway wall thickness (e₄).

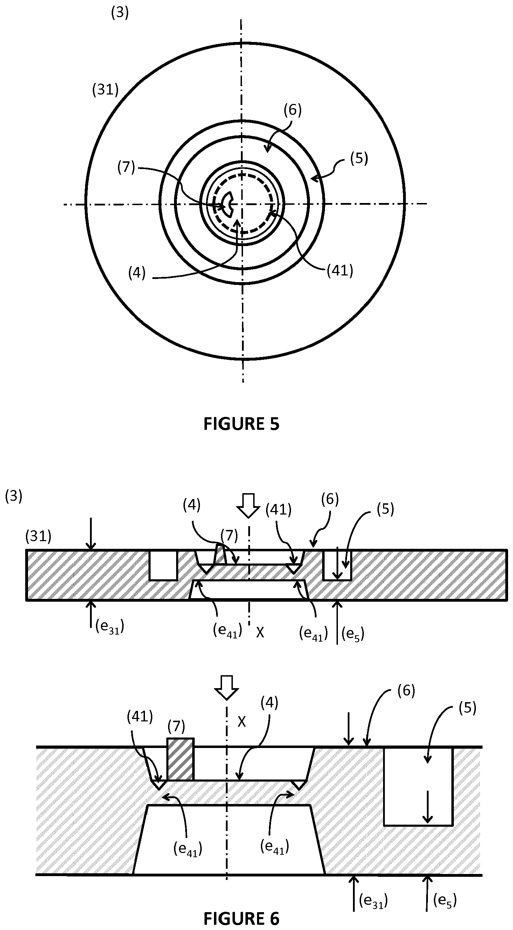

According to an inventive aspect, said flow passageway wall (4) presents a projection element (7) that extends upstream, whereby said projection element (7) develops along an extension beyond the plane defined by the upstream oriented surface of said entry wall part (31), so that said projection element (7) can be impinged by a flow injection part (13) of said brewing device (10) as the latter moves in the closing movement, and thereby generates a deflection moment upon said weakened material region (41) - see **Figures 3** to **10****.**

It is thus provided an additional element of mechanic pressure upon the weakened material region (41) of said passageway wall (4), thereby contributing to a reliable opening thereof.

It is preferred when said projection element (7) is provided only on one side of said flow passageway wall (4) relative to said axial axis (X), preferentially in the proximity of perimeter of said flow passageway wall (4) .

It is further preferred when said projection element (7) develops along an angular extension comprised between 10 to 40°, preferentially between 15 to 35°, of a circumferential alignment that develops in at least approximately manner relative to the circumferential alignment defined by the exterior limit of said passageway wall (4).

It is further preferred when said projection element (7) is provided in the proximity of perimeter and on one side where develops said weakened material region (41) presenting a smaller wall thickness.

According to a preferred embodiment - see **Figures 3** to **10** -, it is preferred when said passageway wall (4) presents a passageway wall thickness (e₄) that corresponds to a thickness reduction of prevailing wall thickness (e₃₁) of said flow entry wall part (31), provided in a region of circular shape and on both side of said flow entry wall part (31), so that said passageway wall (4) develops in an intercalary plane between upstream and downstream oriented exterior surfaces of said flow entry wall part (31).

It is further preferred when said passageway wall (4) is provided closer to the upstream oriented surface than from the downstream oriented surface of said flow entry wall part (31).

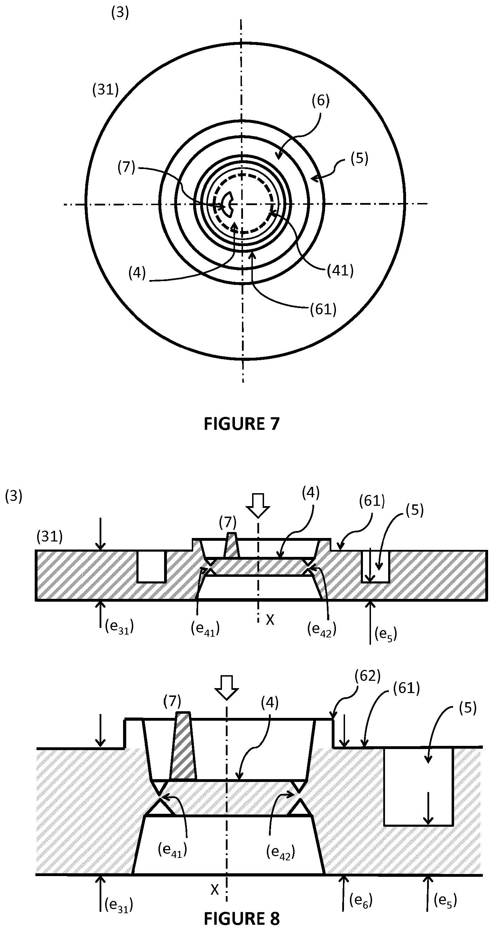

According to an inventive aspect - see **Figures 7** to **10** - said weakened material region (41) is provided as the region between two recesses in opposite sides of said passageway wall (4), whereby said recesses presents at least one of different shape and different dimension relative to the remaining passageway wall (41).

It is preferred when said weakened material region (41) is provided as the region between two recesses in opposite sides of said passageway wall (4), developing along a circumferential alignment of at least approximately similar dimension, whereby said recesses distant from each other in the closest region between each other in the value corresponding to said weakened thickness (e₄₁).

It is preferred when said weakened material region (41) is provided as the region between two recesses in opposite sides of said passageway wall (4), whereby said recesses presents different depths relative to the surface planes of the respective sides of said passageway wall (4), and said maximum depths develop in different projections along planes parallel to said axial axis (X).

It is further particularly preferred when said weakened material region (41) is provided as the region between two recesses in opposite sides of said passageway wall (4), whereby the recesses disposed on the upstream side develop at least partially on a more proximal region than the recesses disposed on the upstream oriented side, with reference to said axial axis (x) of said passageway wall (4).

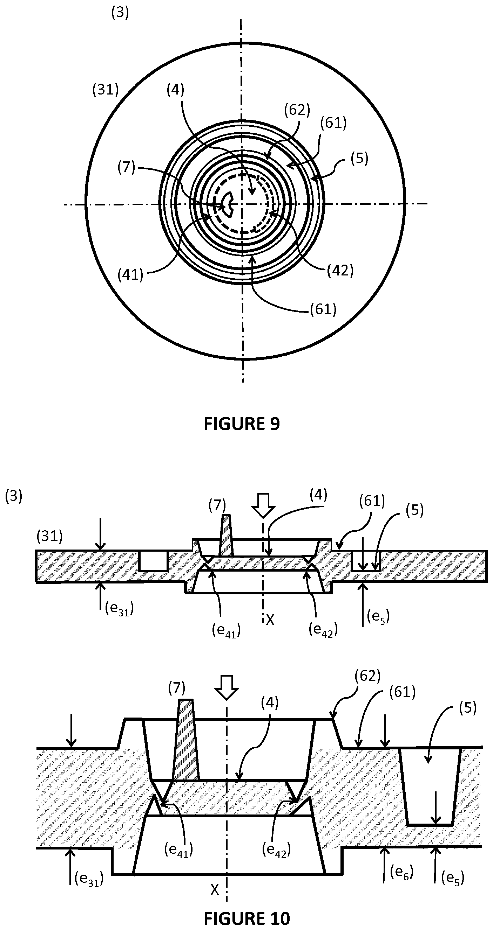

According to another inventive aspect - see **Figures 9** to **10** -, said weakened material region (41) is provided as the region between two recesses in opposite sides of said passageway wall (4) and presenting at least one oblique surface relative to the direction of said axial axis (X), whereby in the region closest to each other said recesses configure two surfaces oblique relative to the direction of said axial axis (X), and that develop at least approximately parallel along a preferential rupture extension that presents said weakened thickness (e₄₁) and develops in oblique manner relative to the direction of said axial axis (X).

It is preferred when said passageway wall (4) is surrounded downstream by a wall that extends beyond the plane defined by the wall thickness (e₃) of said flow entry wall part (31) so that deflects the pressurized flow through the weakened material region (41), and in that at least said downstream surrounding wall, preferentially also an upstream surrounding wall of said passageway wall (4), develop along an oblique direction relative to the direction of said axial axis (X).

It is preferred when said weakened material region (41) is provided along at least most part, preferentially the totality, of a circumferential perimeter and presents a first (e₄₁) and a second (e₄₂) weakened thickness, whereby said first weakened thickness (e₄₁) is smaller than said second weakened thickness (e₄₂).

It is further preferred when said first weakened thickness (e₄₁) develops along a bigger extension than said second weakened thickness (e₄₂).

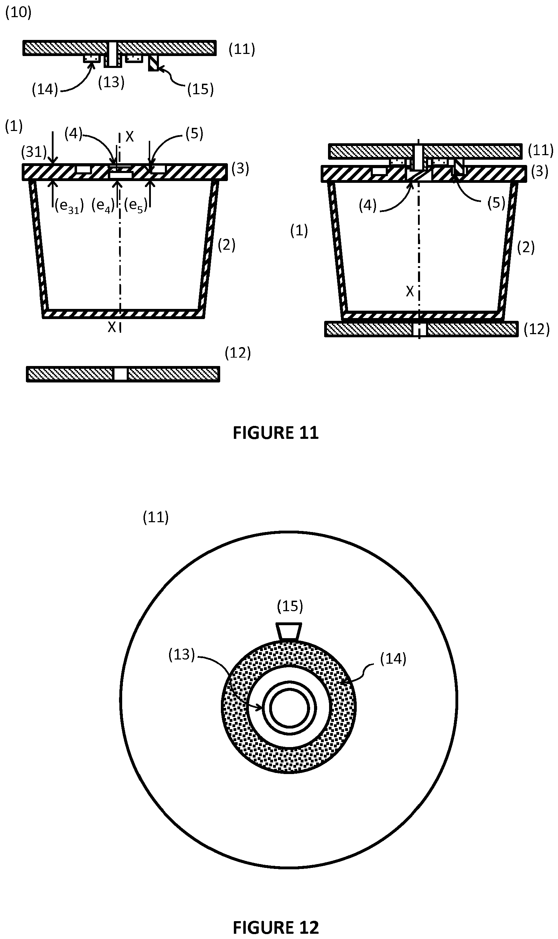

**Figure 11** represents a system according to the present invention comprising a capsule (1) adapted for containing an edible substance, for example roasted and ground coffee beans, and a brewing device (10) adapted for being part of an apparatus for preparing edible products, such as for example a coffee machine.

Said brewing device (10) presents an upstream part (11) adapted for injection of pressurized flow, and a downstream part (12) adapted for collection of the resulting edible product.

As one can observe in **Figure 12****,** the upstream part (11) presents, along the radial direction, injection means (13), a sealing element (14) provided in the proximity of said injection means (13) and further an engagement element (15) provided adjacent to said sealing element (14).

According to an inventive aspect, said injection means (13) are provided as a projection extending downstream and adapted so that exerts a mechanic pressure upon part of said passageway wall (4) in the proximity of the weakened material region (41), so that said passageway wall (4) swivels downstream around a region of said passageway wall (4) that is opposite to said weakened material region (41) as a result of said mechanic pressure - see drawing on the right-hand side of **Figure 11****.**

Moreover, said injection means (13) are provided as a projection adapted so that at least part, preferentially at least most part of respective extension of projection develops inside of the recess formed by said passageway wall on said flow entry wall part (31), when the brewing device (10) is in a closed position.

It is preferred when said injection means (13) are provided as a projection adapted so that exerts a mechanic pressure, preferentially in asymmetric manner, upon part of said passageway wall (4).

It is further preferred when said injection means (13) are provided as a projection adapted so that exerts a mechanic pressure upon a projection element (7) provided so that extends upstream above and higher than said passageway wall (4) - see **Figures 3** to **10****.**

## Claims

1. Capsule (1) for preparing an edible product on a brewing device (10), and presenting:
- a first construction element (2) configured in a container-like form and adapted so as to provide a collection volume for a single portion of an edible substance, and
- a second construction element (3) configured in a circular lid-like form, and adapted so as to confine said collection volume of first construction element (2) and as to provide an entry flow passageway to the interior of said first construction element (2),
whereby said second construction element (3) comprises a flow entry wall part (31) that presents a disk-like general with a prevailing wall thickness (e₃₁) between two plane transversal relative to an axial axis (X) of said wall part (31),
whereby said flow entry wall part (31) is provided in a rigid material,
whereby said flow entry wall part (31) comprises a passageway wall (4) provided with a circular shape delimited by a first circumferential alignment and disposed centred relative to an axial axis (X) of said capsule (1),
whereby said flow passageway wall (4) presents a weakened material region (41) that develops along at least most part of said first circumferential alignment and that is adapted so that breaks under a given upstream flow pressure,
said capsule (1) being **characterized**
**in that** said passageway wall (4) presents a passageway wall thickness (e₄) that is smaller than said prevailing wall thickness (e₃₁), and respective weakened material region (41) is provided by means of a localized reduction of said passageway wall thickness (e₄), so that results a region with a weakened thickness (e₄₁) along said first circumferential alignment, thereby improving the opening of said passageway wall (4) when impinged by a pressurized upstream flow.

2. Capsule (1) according to claim 1,
**characterized in that** said passageway wall (4) is provided as a reduction of said prevailing wall thickness (e₃₁) on a region of circular shape and disposed centred relative to said entry wall part (31), and **in that** said weakened material region (41) is provided in a region presenting said passageway wall thickness (e₄) in the proximity of a region presenting said prevailing wall thickness (e₃₁).

3. Capsule (1) according to claims 1 or 2,
**characterized**
**in that** said passageway wall (4) presents a passageway wall thickness (e₄) that corresponds to a thickness reduction of said prevailing wall thickness (e₃₁) of said entry wall part (31), provided on a region of circular shape and on both sides of said entry wall part (31), so that said passageway wall (4) develops on an intercalary plane between the exterior upstream and downstream oriented surfaces of said entry wall part (31), and in that said passageway wall (4) is provided disposed closer to the upstream oriented surface than to the downstream oriented surface of said entry wall part (31).

4. Capsule (1) according to any of claims 1 to 3, **characterized**
**in that** said passageway wall (4) is surrounded downstream by a wall that extends beyond the plane defined by the wall thickness (e₃) of said entry wall part (31) so that deflects the pressurized flow through the weakened material region (41), and in that at least said downstream surrounding wall, preferentially also an upstream surrounding wall of said passageway wall (4), develop along an oblique region relative to the direction of said axial axis (X).

5. Capsule (1) according to any one of claims 1 to 4, **characterized**
**in that** said weakened material region (41) is provided along at least most part, preferentially the totality, of a circumferential perimeter and presents a first (e₄₁) and a second (e₄₂) weakened thickness, whereby said first weakened thickness (e₄₁) is smaller than said second weakened thickness (e₄₂).

6. Capsule (1) according to any one of claims 1 to 5, **characterized**
**in that** said first weakened thickness (e₄₁) is comprised between 0,05 and 0,20, preferentially between 0,10 and 0,15, of said passageway wall thickness (e₄) of said passageway wall (4).

7. Capsule (1) according to any one of claims 1 to 6, **characterized**
**in that** said weakened material region (41) corresponds to the region between a first recess provided on the upstream oriented side of said passageway wall (4), and a second recess provided on the downstream oriented side of said passageway wall (4), whereby each one of said recesses develops along a transversal direction along a circumferential alignment and develops in an axial direction so that said recesses distance, in the nearest region between themselves, in the value corresponding to said weakened thickness (e₄₁).

8. Capsule (1) according to any one of claims 1 to 7, **characterized**
**in that** said weakened material region (41) is provided as the region between two recesses in mutually opposing sides of said flow passageway wall (4), whereby said recesses present at least one of different shape and different dimension.

9. Capsule (1) according to any one of claims 1 to 8, **characterized**
**in that** said weakened material region (41) is provided as region extending between two recesses on said passageway wall (41) that present different maximum depths relative to the surface planes of respective sides of said passageway wall (4).

10. Capsule (1) according to any one of claims 1 to 9, **characterized**
**in that** said weakened material region (41) is provided as the region extending between two recesses on said passageway wall (4) that present maximum depths that develop in different planes at least approximately parallel to said axial axis (X).

11. Capsule (1) according to any one of claims 1 to 10, **characterized**
**in that** said weakened material region (41) is provided as the region between two recesses disposed in opposing side of said passageway wall (4) and presenting at least one oblique surface relative to the direction of said axial axis (X), whereby in the region closest to each other said recesses configure two surfaces oblique relative to said axial axis (X), and that develop at least approximately parallel along a preferential rupture extension that presents said weakened thickness (e₄₁) and that develops in oblique manner relative to the direction of said axial axis (X).

12. Capsule (1) according to any one of claims 1 a 11, **characterized**
**in that** said weakened material region (41) is provided as the region between two recesses on opposite sides of said passageway wall (4), whereby recesses disposed on the upstream side develop at least partially in a more proximal region than recesses disposed on the downstream oriented side, with reference to said axial axis (x).

13. Capsule (1) according to any one of claims 1 to 12, **characterized**
**in that** said weakened material region (41) presents a first weakened thickness (e₄₁) that develops along an arch of circumference comprised between 348° and 325°, preferentially between 345° and 328°.

14. Capsule (1) according to any one of previous claims 1 to 13, **characterized in that** presents at least one of:
- further presents a recess region (5) provided on the upstream oriented side of said flow entry wall part (31), whereby said recess region (5) develops from a second circumferential alignment in the proximity of said passageway wall (4) and so that defines an intercalary region (6) between said recess region (5) and said passageway wall (4), whereby said recess region (5) presents a recess wall thickness (e₅) that is smaller than the prevailing wall thickness (e₃₁), and bigger than the passageway wall thickness (e₄) of said passageway wall (4), so that said passageway wall (4) is deflected when the pressurized flow breaks said weakened material region (41),
- an intercalary region (6) that presents an intercalary wall thickness (e₆) that is bigger than the passageway wall thickness (e₄) of said passageway wall (4) and bigger than the wall thickness of said recess wall (e₅) of said recess region (5), preferentially is at least approximately similar to said prevailing wall thickness (e₃₁), thereby improving the transmission of structural resistance from said recess region (5) and into said weakened material region (41).

15. **System** for preparing edible products comprising:
- a capsule (1) adapted for containing a single portion of an edible substance, in particular a capsule (1) according to claims 1 to 14, and
- an apparatus for preparing edible products based upon said capsule (1) and including at least one brewing device (10) that presents two actuation parts (11, 12),
whereby said capsule (1) presents an upstream oriented wall part (31) that presents a passageway wall (4) of circular shape and disposed centred relative to an axial axis (X) of said capsule (1), and successively surrounded by an intercalary region (6) and a recess region (5),
whereby said actuation parts (11, 12) are adapted so as to collect said capsule (1), and at least one of said actuation parts (11, 12) can be moved relative to the other so as to engage with the exterior envelope of said capsule (1),
whereby an upstream actuation part (11) comprises injection means (13) adapted for impinging a pressurized fluid flow upon said passageway wall (4) provided on an upstream side of said capsule (1), whereby a downstream actuation part (12) comprises discharge means adapted for collecting a beverage from the downstream side of said capsule (1),
said system being **characterized**
**in that** said injection means (13) are provided as a projection developing downstream and adapted so that exerts a mechanic pressure upon part of said passageway wall (4) in the proximity of said weakened material region (41), so that said passageway wall (4) swivels downstream around a region of said passageway wall (4) opposite to said weakened material region (41) as a result of said mechanic pressure.

## Patentansprüche

1. Kapsel (1) zum Zubereiten eines essbaren Produkts in einer Brühvorrichtung (10), und aufweisend:
- ein erstes Konstruktionselement (2), das in einer behälterartigen Form ausgebildet ist und so angepasst ist, dass es ein Sammelvolumen für eine einzelne Portion einer essbaren Substanz bereitstellt, und
- ein zweites Konstruktionselement (3), das in einer kreisförmigen deckelähnlichen Form ausgebildet ist und so angepasst ist, dass es das gennante Sammelvolumen des ersten Konstruktionselements (2) begrenzt und einen Eintrittsdurchflussdurchgang in das Innere des ersten Konstruktionselements (2) bereitstellt,
wobei das gennante zweite Konstruktionselement (3) einen Durchflusseintrittswandteil (31) umfasst, der ein scheibenähnliches Allgemeinbild mit einer vorherrschenden Wandstärke (e₃₁) zwischen zwei Ebenen quer zu einer axialen Achse (X) des gennanten Wandteils (31), aufweist,
wobei der gennante Durchflusseintrittswandteil (31) aus einem starren Material besteht,
wobei der gennante Durchflusseintrittswandteil (31) eine Durchgangswand (4) umfasst, die in einer kreisförmigen Form ausgebildet ist, die durch eine erste Umfangsausrichtung begrenzt ist und zentriert in Bezug auf eine axiale Achse (X) der gennanten Kapsel (1) angeordnet ist,
wobei die gennante Durchflussdurchgangswand (4) einen Bereich aus geschwächtem Material (41) aufweist, der sich zumindest entlang des grössten Teils der gennanten ersten Umfangsausrichtung entwickelt und der so angepasst ist, dass er unter einem gegebenen stromaufwärtigen Durchflussdruck bricht,
wobei die gennante Kapsel (1) **dadurch gekennzeichnet ist,**
**dass** die gennante Durchgangswand (4) eine Durchgangswandstärke (e₄) aufweist, die kleiner als die gennante vorherrschende Wandstärke (e₃₁) ist, und der jeweilige Bereich aus geschwächtem Material (41) durch eine örtlich begrenzte Verringerung der gennanten Durchgangswandstärke (e₄) bereitgestellt wird, so dass sich ein Bereich mit einer geschwächten Stärke (e₄₁) entlang der ersten Umfangsausrichtung ergibt, wodurch die Öffnung der gennanten Durchgangswand (4) verbessert wird, wenn sie von einem unter Druck stehenden stromaufwärtigen Durchfluss beaufschlagt wird.

2. Kapsel (1) nach Anspruch 1,
**dadurch gekennzeichnet, dass** die gennante Durchgangswand (4) als eine Verringerung der gennanten vorherrschenden Wandstärke (e₃₁) in einem kreisförmigen Bereich bereitgestellt ist und zentriert in Bezug auf den Eintrittswandteil (31) angeordnet ist, und dass der Bereich aus geschwächtem Material (41) in einem Bereich bereitgestellt ist, der die gennante Durchgangswandstärke (e₄) aufweist, in der Nähe eines Bereichs, der die gennante vorherrschende Wandstärke (e₃₁) aufweist.

3. Kapsel (1) nach Anspruch 1 oder 2,
**dadurch gekennzeichnet, dass** die gennante Durchgangswand (4) eine Durchgangswandstärke (e₄) aufweist, die einer Stärkeverringerung der gennanten vorherrschenden Wandstärke (e₃₁) des gennanten Eintrittswandteils (31) entspricht, die in einem kreisförmigen Bereich und auf beiden Seiten des gennanten Eintrittswandteils (31) bereitgestellt ist, so dass sich die gennante Durchgangswand (4) auf einer Zwischenebene zwischen den äusseren stromaufwärts und stromabwärts orientierten Oberflächen des gennanten Eintrittsswandteils (31) entwickelt, und dass die gennante Durchgangswand (4) näher an der stromaufwärts orientierten Oberfläche als an der stromabwärts orientierten Oberfläche des gennanten Eintrittswandteils (31) angeordnet ist.

4. Kapsel (1) nach einem der Ansprüche 1 bis 3,
**dadurch gekennzeichnet, dass** die gennante Durchgangswand (4) stromabwärts von einer Wand umgeben ist, die sich über die durch die Wandstärke (e₃) des gennanten Eintrittswandteils (31) definierte Ebene hinaus erstreckt, so dass der druckbeaufschlagte Durchfluss durch den Bereich aus geschwächtem Material (41) umlenkt wird, und dadurch, dass sich zumindest die stromabwärts umgebende Wand, vorzugsweise auch eine stromaufwärts umgebende Wand der gennanten Durchgangswand (4), sich entlang eines schrägen Bereichs in Bezug auf die Richtung der axialen Achse (X) entwickelt.

5. Kapsel (1) nach einem der Ansprüche 1 bis 4,
**dadurch gekennzeichnet, dass** der Bereich aus geschwächtem Material (41) zumindest entlang des grössten Teils, vorzugsweise der Gesamtheit, eines Umfangsumfangs bereitgestellt ist und eine erste (e₄₁) und eine zweite (e₄₂) geschwächte Stärke aufweist, wobei die gennante erste geschwächte Stärke (e₄₁) kleiner ist als die gennante zweite geschwächte Stärke (e₄₂).

6. Kapsel (1) nach einem der Ansprüche 1 bis 5,
**dadurch gekennzeichnet, dass** die gennante erste geschwächte Stärke (e₄₁) zwischen 0,05 und 0,20, vorzugsweise zwischen 0,10 und 0,15, der gennanten Durchgangswandstärke (e₄) der gennanten Durchgangswand (4) beträgt.

7. Kapsel (1) nach einem der Ansprüche 1 bis 6,
**dadurch gekennzeichnet, dass** der Bereich aus geschwächtem Material (41) dem Bereich zwischen einer ersten Vertiefung, die auf der stromaufwärts orientierten Seite der gennanten Durchgangswand (4) vorgesehen ist, und einer zweiten Vertiefung, die auf der stromabwärts orientierten Seite der gennanten Durchgangswand (4) vorgesehen ist, entspricht, wobei jede der Vertiefungen sich entlang einer Querrichtung entlang einer Umfangsausrichtung entwickelt und sich in einer axialen Richtung entwickelt, so dass die gennanten Vertiefungen, in dem nächstgelegenen Bereich zwischen sich, um den Wert entsprechend der gennanten geschwächten Dicke (e₄₁), beabstandet sind.

8. Kapsel (1) nach einem der Ansprüche 1 bis 7,
**dadurch gekennzeichnet, dass** der Bereich aus geschwächtem Material (41) als der Bereich zwischen zwei Vertiefungen in einander gegenüberliegenden Seiten der gennanten Durchflussdurchgangswand (4) vorgesehen ist, wobei die gennanten Vertiefungen zumindest eine unterschiedliche Form oder unterschiedliche Abmessungen aufweisen.

9. Kapsel (1) nach einem der Ansprüche 1 bis 8,
**dadurch gekennzeichnet, dass** der Bereich aus geschwächtem Material (41) als Bereich, der sich zwischen zwei Vertiefungen an der gennanten Durchgangswand (41) erstreckt, vorgesehen ist, der unterschiedliche maximale Tiefen in Bezug auf die Oberflächenebenen der jeweiligen Seiten der gennanten Durchgangswand (4) aufweist.

10. Kapsel (1) nach einem der Ansprüche 1 bis 9,
**dadurch gekennzeichnet, dass** der Bereich aus geschwächtem Material (41) als der Bereich, der sich zwischen zwei Vertiefungen an der gennanten Durchgangswand (4) erstreckt, vorgesehen ist, der maximale Tiefen aufweist, die sich in verschiedenen Ebenen zumindest annähernd parallel in Bezug auf die axiale Achse (X) entwickeln.

11. Kapsel (1) nach einem der Ansprüche 1 bis 10,
**dadurch gekennzeichnet, dass** der Bereich aus geschwächtem Material (41) als der Bereich zwischen zwei Vertiefungen, die auf gegenüberliegenden Seiten der gennanten Durchgangswand (4) angeordnet sind, vorgesehen ist, und mindestens eine schräge Oberfläche in Bezug auf die Richtung der axialen Achse (X) aufweisen, wobei in der einander am nächsten gelegenen Bereich die gennanten Vertiefungen zwei Oberflächen, die in Bezug zu der axialen Achse (X) schräg sind, ausbilden, und die sich zumindest annähernd parallel entlang einer bevorzugten Brucherstreckung entwickeln, die die geschwächte Stärke (e₄₁) aufweist und die sich schräg in Bezug auf die Richtung der axialen Achse (X) entwickelt.

12. Kapsel (1) nach einem der Ansprüche 1 bis 11,
**dadurch gekennzeichnet, dass** der Bereich aus geschwächtem Material (41) als der Bereich zwischen zwei Vertiefungen auf gegenüberliegenden Seiten der gennanten Durchgangswand (4) vorgesehen ist, wobei sich stromaufwärts angeordnete Vertiefungen zumindest teilweise in einem proximaleren Bereich ausbilden als auf der stromabwärts orientierten Seite angeordnete Vertiefungen, in Bezug auf die gennante axiale Achse (X) .

13. Kapsel (1) nach einem der Ansprüche 1 bis 12,
**dadurch gekennzeichnet, dass** der Bereich aus geschwächtem Material (41) eine erste geschwächte Stärke (e₄₁) aufweist, die sich entlang eines Umfangsbogens zwischen 348° und 325°, vorzugsweise zwischen 345° und 328°, entwickelt.

14. Kapsel (1) nach einem der Ansprüche 1 bis 13,
**dadurch gekennzeichnet, dass** sie mindestens eines der folgenden aufweist:
- weist ferner einen Vertiefungsbereich (5) auf, der auf der stromaufwärts orientierten Seite des gennanten Durchflusseintrittswandteils (31) vorgesehen ist, wobei sich der gennante Vertiefungsbereich (5) aus einer zweiten Umfangsausrichtung in der Nähe der gennanten Durchgangswand (4) entwickelt und so das er einen Zwischenbereich (6) zwischen dem gennanten Vertiefungsbereich (5) und der gennanten Durchgangswand (4) definiert, wobei der gennante Vertiefungsbereich (5) eine Vertiefungswandstärke (e₅) aufweist, die kleiner als die vorherrschende Wandstärke (e₃₁) und grösser als die Durchgangswandstärke (e₄) der gennanten Durchgangswand (4) ist, so dass die gennante Durchgangswand (4) umgelenkt wird, wenn der druckbeaufschlagte Durchfluss den Bereich aus geschwächtem Material (41) bricht,
- einen Zwischenbereich (6), der eine Zwischenwandstärke (e₆) aufweist, die größer als die Durchgangswandstärke (e₄) der gennanten Durchgangswand (4) und größer als die Wandstärke der Vertiefungswand (e₅) des gennanten Vertiefungsbereichs (5) ist, vorzugsweise zumindest näherungsweise ähnlich der vorherrschenden Wandstärke (e₃₁), wodurch die Übertragung des strukturellen Widerstands des gennanten Vertiefungsbereichs (5) und in den Bereich aus geschwächtem Material (41) verbessert wird.

15. **System** zur Zubereitung von essbaren Produkten, umfassend:
- eine Kapsel (1), die dazu angepasst ist, eine einzelne Portion einer essbaren Substanz, insbesondere eine Kapsel (1) nach den Ansprüchen 1 bis 14, zu enthalten, und
- eine Vorrichtung zum Zubereiten von essbaren Produkten basiert auf der gennanten Kapsel (1) und mit mindestens einer Brühvorrichtung (10), die zwei Betätigungsteile (11, 12) aufweist,
wobei die gennante Kapsel (1) einen stromaufwärts orientierten Wandteil (31) aufweist, der eine Durchgangswand (4) von kreisförmiger Form aufweist und zentriert in Bezug auf eine axiale Achse (X) der gennanten Kapsel (1) angeordnet ist und nacheinander von einem Zwischenbereich (6) und einem Vertiefungsbereich (5) umgeben ist,
wobei die gennanten Betätigungsteile (11, 12) zum Aufnehmen der Kapsel (1) ausgebildet sind und mindestens eines der gennanten Betätigungsteile (11, 12) in Bezug auf das andere bewegbar ist, um mit der äusseren Hülle der gennanten Kapsel (1) in Eingriff zu treten,
wobei ein stromaufwärts gelegenes Betätigungsteil (11) eine Injektionseinrichtung (13) umfasst, die dazu angepasst ist, einen druckbeaufschlagten Fluiddurchfluss auf die gennante Durchgangswand (4) auftreffen zu lassen, der auf der stromaufwärts gelegenen Seite der gennanten Kapsel (1) bereitgestellt ist,
wobei ein stromabwärts gelegenes Betätigungsteil (12) eine Abgabeeinrichtung umfasst, die zum Sammeln eines Getränks auf der stromabwärtigen Seite der gennanten Kapsel (1) angepasst ist,
wobei das System **dadurch gekennzeichnet ist,**
**dass** die gennanten Injektionseinrichtungen (13) als ein sich stromabwärts entwickelnder Vorsprung bereitgestellt sind, die so angepasst sind, dass sie einen mechanischen Druck auf einen Teil der gennanten Durchgangswand (4) in der Nähe des Bereichs aus geschwächtem Material (41) ausüben, so dass die gennante Durchgangswand (4) als Ergebnis des mechanischen Drucks stromabwärts um einen Bereich der Durchgangswand (4) gegenüber des Bereichs aus geschwächtem Material (41) herumschwenkt.

## Revendications

1. Capsule (1) pour la préparation d'un produit comestible dans un dispositif de brassage (10) et présentant ce qui suit :
- un premier élément de construction (2) configuré sous une forme de type conteneur et adapté afin de fournir un volume de collecte pour une unique portion d'une substance comestible et
- un second élément de construction (3) configuré sous une forme de type couvercle circulaire et adapté afin de confiner ledit volume de collecte du premier élément de construction (2) et afin de fournir un passage d'entrée du flux vers l'intérieur dudit premier élément de construction (2),
où ledit second élément de construction (3) comprend une partie de paroi d'entrée de flux (31) qui présente une forme générale de type disque avec une épaisseur de la paroi dominante (e₃₁) entre deux plans transversaux par rapport un axe axial (X) de ladite partie de la paroi (31),
où ladite partie de la paroi de l'entrée du flux (31) est fournie dans un matériau rigide,
où ladite partie de la paroi de l'entrée du flux (31) comprend une paroi de passage (4) fournie sous une forme circulaire délimitée par un premier alignement circonférentiel et disposée de manière centrée par rapport à l'axe axial (X) de ladite capsule (1),
où ladite paroi de passage du flux (4) présente une région du matériau affaibli (41) qui se développe le long d'au moins la plupart dudit premier alignement circonférentiel et qui est adaptée afin qu'elle se brise sous une pression donnée de flux en amont,
ladite capsule (1) **se caractérisant**
**par** cette paroi de passage (4), présente une épaisseur de la paroi du passage (e₄) plus petite que ladite épaisseur de la paroi dominante (e₃₁), et la région du matériau affaibli (41) est fournie au moyen d'une réduction localisée de ladite épaisseur de la paroi du passage (e₄), afin qu'il en résulte une région avec une épaisseur affaiblie (e₄₁) le long dudit premier alignement circonférentiel, améliorant donc l'ouverture de ladite paroi de passage (4) lorsqu'elle est empiétée par un flux pressurisé, en amont .

2. Capsule (1) selon la revendication 1,
**caractérisée par le fait que** ladite paroi de passage (4) est fournie comme une réduction de ladite épaisseur de la paroi dominante (e₃₁) dans une région sous forme circulaire et disposée de manière centrée par rapport à ladite partie de la paroi d'entrée (31), et **par le fait que** ladite région du matériau affaibli (41) est fournie dans une région présentant ladite épaisseur de paroi de passage (e₄) à proximité de la région présentant ladite épaisseur de paroi dominante (e₃₁).

3. Capsule (1) selon les revendications 1 ou 2,
**caractérisée par le fait que** ladite paroi de passage (4) présente une épaisseur de paroi de passage (e₄) qui correspond à une réduction de l'épaisseur de l'épaisseur de la paroi dominante(e₃₁) de ladite partie de la paroi d'entrée (31), fournie dans une région de forme circulaire et sur les deux côtés de ladite partie de la paroi d'entrée (31), afin que ladite paroi de passage (4) se développe sur un plan intercalaire entre les surfaces extérieures orientées en aval et en amont de ladite partie de paroi d'entrée (31), et **par le fait que** ladite paroi de passage (4) est fournie de manière plus proche de la surface orientée en amont que de la surface orientée en aval de ladite partie de paroi d'entrée (31).

4. Capsule (1) selon une quelconque revendication entre 1 et 3, **caractérisée par le fait que** ladite paroi de passage (4) est entourée en aval par une paroi qui s'étend au-delà du plan défini par l'épaisseur de la paroi (e₃) de ladite partie de paroi d'entrée (31) afin qu'elle détourne le flux pressurisé à travers la région du matériau affaibli (41) et **par le fait qu'**au moins ladite paroi périphérique en aval, de préférence également une paroi périphérique en amont de ladite paroi de passage (4) se développe le long d'une région oblique par rapport à la direction dudit axe axial (X).

5. Capsule (1) selon une quelconque revendication entre 1 et 4, **caractérisée par le fait que** ladite région de matériau affaibli (41) est fournie le long, d'au moins la plupart, de préférence de la totalité, d'un périmètre circonférentiel et présente une première (e₄₁) et une seconde (e₄₂) épaisseur affaiblie, où ladite première épaisseur affaiblie (e₄₁) est plus petite que ladite seconde épaisseur affaiblie (e₄₂).

6. Capsule (1) selon une quelconque revendication entre 1 et 5, **caractérisée par le fait que** ladite première épaisseur affaiblie (e₄₁) est comprise entre 0,05 et 0,20, de préférence entre 0,10 et 0,15 de ladite épaisseur de la paroi de passage (e₄) de ladite paroi de passage (4).

7. Capsule (1) selon une quelconque revendication entre 1 et 6, **caractérisée par le fait que** ladite région du matériau affaibli (41) correspond à la région entre une première cavité fournie sur le côté orienté en amont de ladite paroi du passage (4) et une seconde cavité fournie sur le côté orienté en aval de ladite paroi de passage (4), où chacune des dites parois se développent le long d'une direction transversale, le long d'un alignement circonférentiel et se développent dans une direction axiale afin que ladite distance des cavités, dans la région la plus proche entre elles, dans la valeur qui correspond à ladite épaisseur affaiblie (e₄₁).

8. Capsule (1) selon une quelconque revendication entre 1 et 7, **caractérisée par le fait que** ladite région de matériau affaiblie (41) est fournie comme la région entre les deux cavités, sur des côtés mutuellement opposés de ladite paroi de passage de flux (4), où lesdites cavités présentent au moins une forme différente et une dimension différente.

9. Capsule (1) selon une quelconque revendication entre 1 ou 8, **caractérisée par le fait que** la région du matériau affaiblie (41) est fournie comme une région s'étendant entre deux cavités de ladite paroi de passage (41) qui présente une profondeur maximale différente par rapport aux plans de surface des côtés respectifs de ladite paroi de passage (4).

10. Capsule (1) selon une quelconque revendication entre 1 et 9, **caractérisée par le fait que** la région de matériau affaibli (41) est fournie comme la région s'étendant entre deux cavités sur ladite paroi de passage (4) qui présente des profondeurs maximales qui se développent sur différents plans au moins approximativement parallèles au dit axe axial (X).

11. Capsule (1) selon une quelconque revendication entre 1 et 10, **caractérisée par le fait que** ladite région de matériau affaibli (41) est fournie comme la région entre deux cavités disposées à l'opposé de ladite paroi de passage (4) et présentant au moins une surface oblique par rapport à la direction dudit axe axial (X), où, dans la région la plus proche de chacune, les dites cavités configurent deux surfaces obliques par rapport au dit axe axial (X) et qui se développent au moins approximativement de manière parallèle le long d'une extension de rupture préférentielle qui présente ladite épaisseur affaiblie (e₄₁) et qui se développent de manière oblique par rapport à la direction dudit axe axial (X).

12. Capsule (1) selon une quelconque revendication entre 1 et 11, **caractérisée par le fait que** ladite région du matériau affaibli (41) est fournie comme une région entre deux cavités sur des côtés opposés de ladite paroi de passage (4), où les cavités disposées sur le côté en amont se développent au moins partiellement dans une région plus proximale que les cavités disposées sur le côté orienté en aval, avec une référence au dit axe axial (x).

13. Capsule (1) selon une quelconque revendication entre 1 et 12, **caractérisée par le fait que** la région du matériau affaibli (41) présente une première épaisseur affaiblie (e₄₁) qui se développe le long d'un arc de circonférence compris entre 348° et 325°, de préférence entre 345° et 328°.

14. Capsule (1) selon une quelconque revendication précédente entre 1 et 13, **caractérisée par le fait qu'**elle présente au moins :
- qu'elle présente, en outre, une région de cavité (5) fournie sur le côté orienté en amont de ladite partie de la paroi d'entrée du flux (31), où ladite région de cavité (5) se développe à partir d'un second alignement circonférentiel à proximité de ladite paroi de passage (4) et afin que cela définisse une région intercalaire (6) entre ladite région de cavité (5) et ladite paroi de passage (4), où ladite région de cavité (5) présente une épaisseur de paroi de cavité (e₅) plus petite que l'épaisseur de la paroi dominant (e₃₁) et plus grande que l'épaisseur de la paroi de passage (e₄) de ladite paroi de passage (4), afin que ladite paroi de passage (4) soit détournée lorsque le flux pressurisé casse ladite région du matériau affaibli (41),
- une région intercalaire (6) qui présente une épaisseur de paroi intercalaire (e₆) plus grande que l'épaisseur de la paroi de passage (e₄) de ladite paroi du passage (4) et plus grande que l'épaisseur de la paroi de ladite paroi de la cavité (e₅) de ladite région de la cavité (5), de préférence, elle est au moins approximativement similaire à ladite épaisseur de la paroi dominante (e₃₁), améliorant ainsi la transmission de la résistance structurelle depuis ladite région de la cavité (5) et dans ladite région du matériau affaibli (41).

15. **Système** de préparation de produits comestibles, comprenant :
- une capsule (1) adaptée pour contenir une portion unique d'une substance comestible, en particulier une capsule (1) selon les revendications 1 à 14 et
- un appareil de préparation de produits comestibles qui a comme base ladite capsule (1) et incluant au moins un dispositif de brassage (10) qui présente deux parties d'actionnement (11, 12),
où ladite capsule (1) présente une partie de la paroi orientée en amont (31) qui présente une paroi de passage (4) sous forme circulaire et disposée de manière centrée par rapport à un axe axial (X) de ladite capsule (1) et successivement entourée par une région intercalaire (6) et une région de cavité (5),
où lesdites parties d'actionnement (11, 12) sont adaptées afin de collecter ladite capsule (1) et au moins, l'une des dites parties d'actionnement (11, 12) peut être déplacée par rapport à l'autre afin de s'engager avec l'enveloppe extérieure de ladite capsule (1),
où une partie de l'actionnement en amont (11) comprend des moyens d'injection (13) adaptés à l'empiétement d'un flux de fluide pressurisé sur ladite paroi de passage (4) fournie sur un côté en amont de ladite capsule (1),
où une partie d'actionnement en aval (12) comprend des moyens de décharge adaptés à la collecte d'un breuvage depuis le côté en aval de ladite capsule (1),
ledit système étant **caractérisé**
**par le fait que** lesdits moyens d'injection (13) sont fournis comme une projection se développant en aval et adaptée afin qu'elle exerce une pression mécanique sur une partie de ladite paroi de passage (4) à proximité de ladite région de matériau affaiblie (41), afin que ladite paroi de passage (4) pivote en aval autour de la région de ladite paroi de passage (4) à l'opposé de ladite région de matériau affaibli (41) résultant de ladite pression mécanique.
